# EUROPEAN PATENT APPLICATION

(11) **EP 1 672 932 A1**
(43) Date of publication of application: **21.06.2006**
(21) Application number: 05077279.7
(22) Date of filing: 07.10.2005
(51) Int. Cl.: H04N 9/31, H01J 61/00, G03B 21/20

(54) **Improved single light valve projection device and method for projecting images**

(30) Priority: 20.12.2004 US 636859 P
(71) Applicant: Barco, naamloze vennootschap., 8500 Kortrijk (BE)
(72) Inventor: Gerets, Peter, 8800 - Roeselare (BE)
(74) Representative: Donné, Eddy

(57) **Abstract**

Improved single light valve projection device characterised in that it comprises a metal halide lamp (2), which driven by alternating current (AC); a relay-optic (8), consisting of an optical assembly; a single light valve element (10); a rotating colour wheel (11) which is positioned in between said metal halide lamp (2) and the relay-optic (8) and which colour wheel (11) contains at least two different colour filters; and in that the projection device (1) comprises means (12) for synchronising the rotational speed of said colour wheel (11), with the frequency of the alternating drive current of said metal halide lamp (2) and with the sequence of generating the single colour components by the light valve element (10).

## Description

The present invention relates to an improved single light valve projection device, such as a single chip projection device.

A single chip projection device consists of a lamp and a reflector and an optical assembly called the relay optic, which takes in the light of the lamp-reflector combination.

The output of the relay optic is cast into a prism called the "total internal reflection prism" (TIR prism) which casts the light coming from the lamp onto a light valve element, such as a "digital mirror device" (DMD).

Said DMD reflects the light according to the digital pattern which is programmed on it (e.g. a video image signal) and reflects this light pattern back into the TIR-prism which guides the light on its turn back through the projection-lens optics and onto a screen.

In between the lamp and the relay-optic, a rotating colour wheel is positioned which contains colour filters, for example a red, green and blue (RGB) filter.

Since a coloured video-image is constructed by means of red, green and blue components and there is only a single light valve element, the combination of the colour wheel and the light valve element uses the latency of the viewers eye to recombine the RGB-components of the image on screen.

The rotation of the colour wheel is synchronised with the RGB-sequence on the light valve element.

When the light valve element represents the red part of the image, the wheel filters the light of the lamp with a red filter, only casting red light on the valve element and thus projecting the information of the red components of the image on the screen. Same goes for the green and blue components, resulting in the fully composed coloured image by sequencing the colour information. This process is called colour sequencing.

Up to now, for such single light valve projection devices, use is made of a Xenon lamp, since this kind of lamp shows the advantage that it has a very high luminous flux and is very compact at the same time. However, an important disadvantage of this type of lamp is that it is placed under a very high pressure, for example 15 bar, even in the cold state, which makes them unsafe for handling as they might explode.

Another type of lamp, namely a metal halide lamp, is well known in the art as it is commonly used in lots of luminary applications. It comprises a glass bulb with an arc-chamber, wherein two electrodes are provided at a distance from each other, defining a gap there between, and a metal halide gas, such as Mercury halide or the like, inside said glass bulb.

Due to the fact that such metal halide lamps are very low pressure lamps at room temperature, for example 1 bar, it makes them much safer to handle than the above mentioned Xenon lamps. However, such metal halide lamps are not suitable to be used with small aperture light valve devices, such as for example digital mirror devices (DMD's), since they show a much larger arc-gap than said Xenon lamps, resulting in a less efficient light output in the optical system of the projector or the like.

Tests have shown that, in order to obtain a more regular and intense light output of the metal halide lamp for use in projection applications, the electrodes of the lamp need to be brought closer to each other, whilst the chemical gas composition in the arc-chamber of the lamp needs to be changed.

However, due to the change of the chemical gas composition, the spectrum of the lamp gets disturbed. For example in case of the use of Mercury halide, the spectrum of the lamp shifts more into the yellow/green spectrum and away from the red spectrum. This effect is highly undesirable as one of the major issues in lighting and projection applications is a flat spectrum, providing a neutral light-distribution.

The present invention aims at an improved single light valve projection device which does not show the above mentioned and other disadvantages.

To this aim the present invention concerns an improved single light valve projection device comprising a metal halide lamp which driven by alternating current (AC); a relay-optic, consisting of an optical assembly; a single light valve element; a rotating colour wheel which is positioned in between said metal halide lamp and the relay-optic and which colour wheel contains at least two different colour filters; and means for synchronising the rotational speed of said colour wheel, with the frequency of the alternating drive current of said metal halide lamp and with the sequence of generating the single colour components by the light valve element.

Such an improved single light valve projection device makes it possible to apply a safe metal halide lamp for projection applications as it permits to compensate the lack of a particular colour component completely or partially.

Indeed, the metal halide lamp is driven by alternating current, which results in an arc with two alternating hotspots at the electrodes of the lamp. According to the invention, just before the cross-over through the zero drive current point, to stabilise the arc, a boost in the power, and more specific in the drive current through the lamp, is applied at the end of every half wave of the alternating current signal, resulting in a peak of light output.

By means of said synchronisation means the rotational speed of the colour wheel is synchronised with the frequency of said alternating drive current of the lamp, in such a manner that the timing of the boost of the current, the moment of the projection of a specific image component and the moment of the passing of the colour filter in front of said metal halide lamp are synchronised, such that a shifted colour spectrum can be compensated by using the temporarily increased light output of the lamp for displaying the reduced colour component.

The invention also relates to a method of projecting images by means of a single light valve projection device comprising a lamp; a relay-optic, consisting of an optical assembly; a single light valve element; a rotating colour wheel which is positioned in between said lamp and the relay-optic and which colour wheel contains at least two different colour filters, wherein said method provides for using a metal halide lamp which is driven by an alternating current and wherein the method comprises the step of applying a regular boost in the drive current through said lamp and of synchronizing the passing of a particular colour filter between said metal halide lamp and said relay-optic with said boost of the drive current through the metal halide lamp and with the projection of a specific image component for this particular colour by the light valve element.

With the intention of better showing the characteristics of the invention, hereafter, as an example without any restrictive character, several preferred forms of embodiment are described, as well as a method of projecting images by means of such an improved single light valve projection device, with reference to the accompanying drawings, wherein:
Figure 1 schematically represents an improved single light valve projection device according to the invention;
figure 2 represents the relationship between the rotational speed of the colour wheel and the frequency of the current supply of the metal halide lamp.

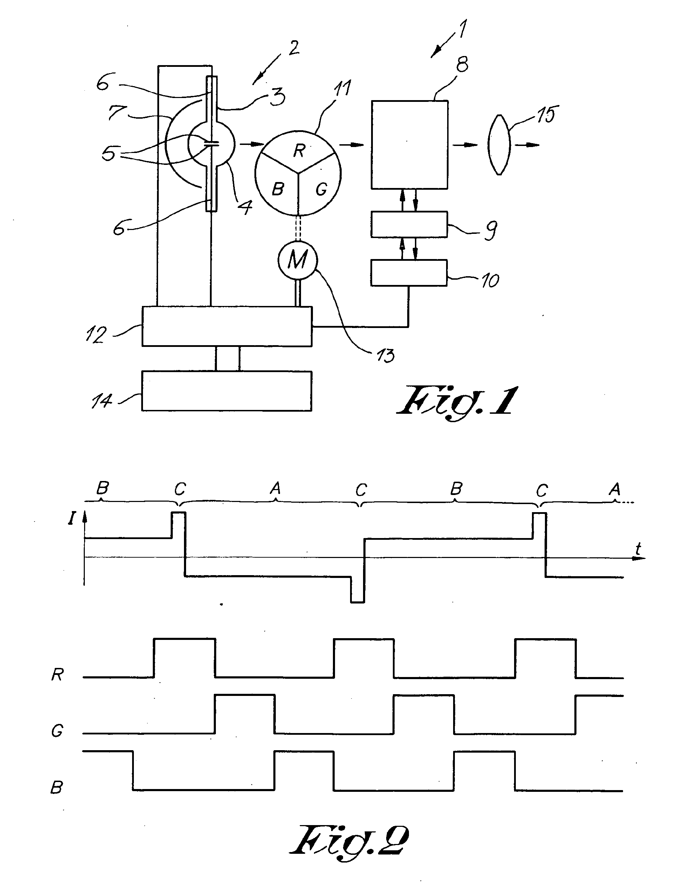

Figure 1 schematically represents an improved single light valve projection device 1 which comprises a casing which is not represented and in which a metal halide lamp 2 is provided.

Said lamp 2 is mainly build-up in a traditional manner and comprises a glass bulb 3 which encloses an arc-chamber 4 and two electrodes 5 which are placed in said arc-chamber 4 at a relatively small distance from each other, defining a gap there between. In said bulb 3 a metal halide gas, such as for example Mercury halide, is further provided.

Each electrode 5 is provided with connection means in the form of an electric conductor 6 which extends outside said bulb 3.

Behind said lamp 2 a concave mirror 7 is placed.

Said single light valve projection device 1 further comprises a relay-optic 8, which has been schematically represented in figure 1 and which consists of an optical assembly, such as a plurality of lenses, filters or other optical elements.

In this case, said device 1 comprises a total internal reflection (TIR) prism 9 and a single light valve element 10, for example in the form of a digital mirror device (DMD).

Between said relay-optic 8 and said lamp 2 a rotating colour wheel 11 is provided which contains at least two different colour filters and, in this case, contains a red, a green and a blue (RGB) filter. These filters are realised in such a way that, for example, the red filter only lets the red light through, while accordingly the green and the blue filter, respectively let the green and the blue light through.

According to the invention, a single light valve projection device 1 is provided with synchronisation means 12 for synchronising the rotational speed of said colour wheel 11 with the frequency of the drive current I of said metal halide lamp 2 and with the sequence of generating the single colour components by the light valve element 10.

Said synchronisation means 12 are connected to the conductors 6 of said lamp 2, to a drive motor 13 for said rotating colour wheel 11 and to said light valve element 10.

Further, said synchronisation means 12 are connected to a power supply 14, for example in the form of an alternating current source or the like.

Preferably behind said relay-optic 8 a lens 15 is placed, however, such lens 15 can also be incorporated in said relay-optic 8.

The functioning of an improved single light valve projection device 1 is rather simple and as follows.

The power supply 14 feeds the synchronisation means 12, which on its turn provides an alternating current I to said electrodes 5 of said lamp 2, via said conductors 6.

Due to ionisation of the metal halide inside the bulb 3 arcing occurs between the electrodes 5, leading to a light output. As the electrodes 5 are placed relatively close to each other, there is need of a change in the chemical composition of the gas of said lamp 2 to obtain proper functioning thereof.

Due to the changed composition of the gas in the lamp 2, the spectrum of the lamp 2 gets shifted. For example, when using Mercury halide the spectrum is shifted towards the yellow spectrum and away from the red spectrum, leading to a reduced red light output.

The light of said lamp 2 is projected through said rotating colour wheel 11, which is synchronised with the AC feed signal of said metal halide lamp 2, as shown in figure 2, for a low pressure mercury lamp with increased Mercury halide content.

To this aim, the synchronisation means 12 synchronise the frequency of the drive current I of the metal halide lamp 2 and the rotational speed of the drive motor 13 of said colour wheel 11 which is for example frequency driven. Therefore, said synchronisation means 12 preferably comprise a frequency converter for adjusting the frequency of the drive current I of said metal halide lamp 2.

As the drive current I of the lamp 2 is alternating, the arc between said electrodes 5 has two alternating "hotspots" on the electrodes 5 of the lamp 2.

During the first time interval A, as represented in figure 2, a hotspot is situated at the first electrode 5, while during the consecutive second time interval B, a hotspot is situated at the second electrode 5.

As the drive current I of the metal halide lamp 2 is alternating, the sequence of the intervals A and B is continuously repeated.

At the end C of each halfwave A or B of said AC signal, a power boost, and more specific a boost in the drive current through the lamp 2, is applied to the lamp, resulting in a peak in the light output.

According to the invention the synchronisation between the colour wheel 11 and the drive current I of the metal halide lamp 2 is realised in such a way that, in this case, the red filter passes between the relay-optic 8 and the lamp 2 at the moment of the boost in the drive current I through the lamp 2.

After passing through said filter, the light is taken in by the relay-optic 8, which in turn casts the light into the TIR-prism 9 which projects the light on the light valve element 10.

This single light valve element 10 is synchronised with the frequency of the drive current I of the lamp 2 by the synchronisation means 12, in order to obtain that this light valve element 10 projects the red image component at the time of the boost of the drive current I, and the passing of the red filter between said lamp 2 and said relay-optic 8.

Due to the increased light output at the time of the passing of the red filter in front of the lamp 2 and the projecting of the red image component at this exact time, the decrease in the red spectrum of the output of the lamp 2 is compensated, leading to an apparently flat spectrum as required in projection applications.

The light signal is reflected into the TIR prism 9 and back into the relay-optic 8, which finally casts the light through a projection lens 15 which projects the light onto a screen, a wall, or any other medium suitable to be used for this aim.

Between two consecutive zero crossings of the drive current I of the lamp 2, there is a time interval A or B where the light output is reduced compared to the moment of the boost of the drive current I.

During these intervals A and B, the resting green and blue filter pass between the metal halide lamp 2 and the relay-optic 8 and the light valve element 10 represents, respectively, the green and blue parts of the image.

Since a coloured video-image is constructed by means of red, green and blue components and there is only a single light valve element 10, the combination of the colour wheel 11 and the light valve element 10 uses the latency of the viewer's eye to recombine the RGB-components of the image on the screen, resulting in fully composed coloured images by sequencing the colour information.

In this case the AC-signal is realised with a square waveform. However, the invention is not limited as such, as this signal can also be realised with a sine, triangle or sawtooth waveform. However the square waveform has shown to lead to better results.

In this form of embodiment of an improved single light valve projection device 1 according to the invention said metal halide lamp 2 is a Mercury halide lamp. It is not excluded to use other types of metal halide lamps. In this case the colour wheel might be provided with other colour filters than a red, green and blue filter.

According to the invention any number of colour filters can be provided on said colour wheel 11, for example, such that it shows an RGBRGB-sequence clockwise. An important advantage of such a variant is that said colour wheel 11 can rotate at half speed with respect to said first form of embodiment, which in this case means that the colour wheel 11 can rotate at the same frequency as the frequency of the drive current I of the lamp 2.

In a particular form of embodiment, said drive motor 13 is coupled to said colour wheel 11 by means of a reduction. This permits to let the motor 13 or the colour wheel 11 to rotate at a reduced rotational speed.

The present invention is in no way limited to the embodiments described above and represented in the drawings, but such an improved single light valve projection device may be realised in different shapes and dimensions, without departure from the scope of the invention.

## Claims

1. Improved single light valve projection device **characterised in that** it comprises a metal halide lamp (2), which driven by alternating current (AC); a relay-optic (8), consisting of an optical assembly; a single light valve element (10); a rotating colour wheel (11) which is positioned in between said metal halide lamp (2) and the relay-optic (8) and which colour wheel (11) contains at least two different colour filters; and **in that** the projection device (1) comprises means (12) for synchronising the rotational speed of said colour wheel (11), with the frequency of the alternating drive current of said metal halide lamp (2) and with the sequence of generating the single colour components by the light valve element (10).

2. Improved single light valve projection device as claimed in claim 1, **characterised in that** said colour wheel (11) contains at least three different colour filters.

3. Improved single light valve projection device as claimed in claim 2, **characterised in that** said colour wheel (11) is provided with at least one red, one green and one blue filter.

4. Improved single light valve projection device as claimed in claim 1, **characterised in that** said light valve element (10) consists of a digital mirror device.

5. Improved single light valve projection device as claimed in claim 1, **characterised in that** said colour wheel (11) is provided with driving means in the form of an electric motor (13).

6. Improved single light valve projection device as claimed in claim 5, **characterised in that** said electric motor (13) is frequency driven.

7. Improved single light valve projection device as claimed in claim 1, **characterised in that** said synchronising means (12) comprise a frequency converter for adjusting the frequency of the drive current of said metal halide lamp (2).

8. Improved single light valve projection device as claimed in claim 1, **characterised in that** said metal halide lamp (2) is a Mercury halide lamp and said colour wheel (11) comprises a red filter.

9. Improved single light valve projection device as claimed in claim 1, **characterised in that** between said relay optic (8) and said light valve element (10) a total internal reflection (TIR) prism (9) is provided.

10. Improved single light valve projection device as claimed in claim 1, **characterised in that** said synchronisation is realised such that the passing of a particular colour filter between said metal halide lamp (2) and said relay-optic (8) coincides with a boost of the current through the metal halide lamp (2) and with the projection of a specific image component for the same colour by the light valve element (10).

11. Method of projecting images by means of a single light valve projection device (1) comprising a lamp (2); a relay-optic (8), consisting of an optical assembly; a single light valve element (10); a rotating colour wheel (11) which is positioned in between said lamp (2) and the relay-optic (8) and which colour wheel (11) contains at least two different colour filters, **characterised in that** said method provides for using a metal halide lamp (2) which is driven by an alternating current and wherein the method comprises the step of applying a regular boost in the drive current through said lamp (2) and of synchronising the passing of a particular colour filter between said metal halide lamp (2) and said relay-optic (8) with said boost of the drive current through the metal halide lamp (2) and with the projection of a specific image component for this particular colour by the light valve element (10).

12. Method as claimed in claim 11, **characterised in that** use is made of a Mercury halide lamp (2); and **in that** the red filter of the colour wheel (11) passes between the relay-optic (8) and said lamp (2) at the same time as the boost of the drive current through said lamp (2) and wherein at the same time the red image component is projected by means of said light valve element (10).
